**Europäisches Patentamt**

**European Patent Office**

**Office européen des brevets**

(11) Veröffentlichungsnummer : **0 479 050 B1**

(12) **EUROPÄISCHE PATENTSCHRIFT**

(45) Veröffentlichungstag der Patentschrift :
**08.06.94 Patentblatt 94/23**

(21) Anmeldenummer : **91115885.5**

(22) Anmeldetag : **19.09.91**

(51) Int. Cl.$^5$ : **C01B 21/068,** C01B 21/087, C04B 35/58

(54) Siliciumdiimid, verfahren zu dessen Herstellung sowie daraus erhaltenes Siliciumnitrid.

(30) Priorität : **02.10.90 DE 4031070**

(43) Veröffentlichungstag der Anmeldung :
**08.04.92 Patentblatt 92/15**

(45) Bekanntmachung des Hinweises auf die
Patenterteilung :
**08.06.94 Patentblatt 94/23**

(84) Benannte Vertragsstaaten :
**CH DE ES FR GB IT LI NL SE**

(56) Entgegenhaltungen :
**EP-A- 0 225 412**
**EP-A- 0 315 953**
**DE-A- 3 516 589**
**US-A- 4 725 660**

(73) Patentinhaber : **BAYER AG**
**D-51368 Leverkusen (DE)**

(72) Erfinder : **Wannagat, Ulrich, Prof. Dr. Dr. h.c.**
**Waldweg 12**
**W-3340 Wolfenbüttel (DE)**
Erfinder : **Schervan, Adrian, Dr.**
**Hafenstrasse 38**
**W-4700 Hamm (DE)**
Erfinder : **Jansen, Martin, Prof., Dr.**
**Zur Marterkapelle**
**W-5300 Bonn (DE)**
Erfinder : **Baldus, Hans-Peter, Dr.**
**Weidenweg 39**
**W-5093 Burscheid (DE)**
Erfinder : **Eiling, Aloys, Dr.**
**Schmiedestrasse 12**
**W-4630 Bochum 6 (DE)**

## Beschreibung

Die vorliegende Erfindung betrifft hochreines Siliciumdiimid $[Si(NH)_2]_x$ sowie Verfahren zu dessen Herstellung.

Der Werkstoff Siliciumnitrid ist aufgrund seiner Festigkeit, seiner Temperaturwechselbeständigkeit und seiner Korrosionsbeständigkeit einer der vielversprechendsten Hochleistungsmaterialien. Er findet Verwendung als hitzebeständiges Material im Motoren- und Turbinenbau sowie als Schneidwerkzeug.

Verschiedene Verfahren zur Herstellung von Siliciumnitrid über Siliciumdiimid als Zwischenstufe sind bekannt geworden. Sie beruhen auf der Reaktion von $SiCl_4$ oder $SiS_2$ mit Ammoniak bei hohen oder tiefen Temperaturen und können in vier Gruppen eingeteilt werden.

1. Reaktion zwischen einer flüssigen Phase, die $SiCl_4$ enthält und flüssigem Ammoniak bei Normaldruck oder erhöhtem Druck (US-A 4 196 178).
2. Reaktion zwischen $SiCl_4$-Dampf und gasförmigem Ammoniak bei erhöhter Temperatur (US-A 4 145 224).
3. Reaktion von $SiS_2$ mit flüssigem Ammoniak (M. Blix und W. Wirbelauer, Ber. Deut. Chem. Ges. 36, 4220 (1903)).
4. Reaktion von flüssigem $SiCl_4$ mit festem Ammoniak (O, Glemser und E. Naumann in "Über den thermischen Abbau von Siliciumdiimid", Z. Anorg. Allg. Chem. 289, S. 134, (1959)).

Die vier hier genannten Verfahren weisen signifikante Mängel auf, die entweder im Verfahren selbst liegen oder zu Produkten mit ungenügenden Eigenschaften führen. Diese Mängel werden im folgenden näher beschrieben.

Die Reaktion von flüssigem $SiCl_4$ mit flüssigem Ammoniak ist stark exotherm und daher sehr schwer kontrollierbar. Das dabei entstehende Nebenprodukt $NH_4Cl$ verstopft zudem oft die Reaktionsapparatur.

Gemäß dem in der US-A 4 196 178 beschriebenen Verfahren wird angestrebt, durch Verdünnung des Siliciumtetrachlorides mit organischen Lösungsmitteln eine Kontrolle der sehr heftigen Reaktion von $SiCl_4$ mit $NH_3$ zu erreichen. Durch das organische Lösungsmittel gelangen jedoch erhebliche Mengen Kohlenstoff in das Produkt, die die Sinterfähigkeit des keramischen Pulvers stark herabsetzen.

Die zweite oben beschriebene Methode, die Reaktion von gasförmigem $SiCl_4$ und Ammoniak bei ca. 1300°C zu $Si_3N_4$ hat zwar den großen Vorteil, daß, theoretisch, neben dem gewünschten Produkt ausschließlich Chlorwasserstoff entsteht, der sehr leicht von dem festen Produkt zu entfernen sein sollte, Praktisch jedoch ist noch eine erhebliche Menge chemisch gebundenes Chlor in dem auf diese weise hergestellten Siliciumnitrid vorhanden, welches nur mit großem Aufwand entfernt werden kann.

Das Siliciumdiimid, das durch Reaktion von $SiS_2$ mit Ammoniak hergestellt wird, zeigt ebenfalls ungenügende Reinheit, da signifikante Anteile von Schwefel im Produkt zurückbleiben.

Die oben beschriebene Reaktion der Herstellung von Siliciumdiimid durch Reaktion von festem Ammoniak mit flüssigem $SiCl_4$ ist in doppelter Hinsicht unvorteilhaft: Erstens aufgrund des großen technischen Aufwandes, der für diese Darstellungsart erforderlich ist; zweitens aufgrund der mangelnden Reaktionskontrolle, da die exotherme Reaktion von $SiCl_4$ mit Ammoniak letzteres zum Schmelzen bringt.

Aus der US-A 4 725 660 ist ein Verfahren bekannt, nach dem $Si(NHCH_3)_4$ mit $NH_3$ in Abwesenheit von Lösungsmitteln oberhalb der Schmelztemperatur des Silans zu Polysilazanen der Zusammensetzung $[Si(NH)_2]_x$ umgesetzt wird. Das erhaltene Produkt fällt harzförmig an. Nach dessen Pyrolyse enthält das Pyrolyseprodukt immer noch ca. 16 % Kohlenstoff, Tatsächlich kann also nach diesem Verfahren aufgrund von vorzeitiger Polymerisation nur ein kohlenstoffhaltiges Polysilazan erhalten werden.

Aufgabe der vorliegenden Erfindung ist die Bereitstellung eines Siliciumdiimids, welches die beschriebenen Nachteile nicht aufweist und für die Weiterverarbeitung zu hochwertigem $Si_3N_4$ geeignet ist.

Diese Aufgabe wird gelöst durch ein Siliciumdiimid $[Si(NH)_2]_x$, welches Gegenstand dieser Erfindung ist. Es ist dadurch gekennzeichnet, daß es einen Kohlenstoffgehalt von maximal 0,5 Gew.-% und einen Chlorgehalt von maximal 20 ppm aufweist.

Bevorzugt beträgt der Chlorgehalt des erfindungsgemäßen Siliciumdiimids weniger als 10 ppm. Dieses Siliciumdiimid ist darüber hinaus schwefelfrei.

Gegenstand dieser Erfindung ist auch ein Verfahren zur Herstellung des erfindungsgemäßen Siliciumdiimids, wonach ein chlorfreies Organylaminosilan der allgemeinen Formel $Si(NRR')_4$, wobei R und R' gleich oder verschieden sind und $C_1$-$C_6$-Alkyl, Vinyl, Phenyl oder Wasserstoff sind, mit Ammoniak bei Temperaturen zwischen 50°C und 300°C ammonothermal zu Siliciumdiimid umgesetzt wird.

Hierbei wird anschließend von einem chlorfreien Tetraorganylaminosilan $Si(NRR')_4$ mit Ammoniak das erfindungsgemäße Siliciumdiimid sowie Organylamin erhalten.

Die Herstellung von chlorfreiem $Si(NRR')_4$ ist Gegenstand der deutschen Patentanmeldung DE-A-40 01 246 (veröffentlicht 25.07.91)

Das bei dieser Reaktion in Form von Hydrochlorid anfallende Organylamin kann leicht wieder in den Kreislauf zurückgeführt werden. Beim Einsatz höherer flüssiger Aminosilane sind leichte Chlorkontaminationen durch nicht vollständig abgetrenntes Organylaminhydrochlorid möglich. Bevorzugt wird daher ein Tetraorganylsilan eingesetzt, in dem R = $CH_3$ und R' = H bedeutet.

Ebenso bevorzugt ist die Variante des erfindungsgemäßen Verfahrens, bei der R = $C_2H_5$ und R' = H bedeutet.

Das so erhaltene Organylaminosilan wird unter Inertgas bevorzugt in einen Email- oder Teflonautoklaven eingebracht und bei Temperaturen zwischen 20 und 300°C und Drücken zwischen 1 und 200 bar mit hochreinem Ammoniak zu $[Si(NH)_2]_x$ umgesetzt.

Das Molverhältnis von Organylaminosilan zu Ammoniak sollte vorzugsweise zwischen 1:3 und 1:1000, besonders bevorzugt bei 1:50, liegen.

Nach einer Reaktionsdauer von 24 bis 120 Stunden (je nach verwendetem Aminosilan) hat sich das Aminosilan zum Siliciumdiimid umgesetzt. Zur vollständigen Umaminierung wird das so erhaltene Produkt isoliert und 20 Minuten bis 6 Stunden zwischen 600°C und 1200°C im ammoniakhaltige Atmosphäre gebracht.

Die Charakterisierung der anfallenden Pulver kann über Stickstoff-, Sauerstoff- und Kohlenstoffbestimmung sowie DTA-TG-Messungen erfolgen.

Die Sauerstoff- und Kohlenstoffgehalt des so behandelten Diimids liegen bevorzugt unter 1,0 Gew.-% bzw. unter 0,5 Gew.-% (Messung mit den Geräten O-N-Mat bzw. C-S-MAT der Fa. Ströhlein, 4044 Karst 1, Germany).

Das erfindungsgemäße Siliciumdiimid ist hervorragend geeignet zur Weiterverarbeitung zu $Si_3N_4$. Hierzu wird es 20 Minuten bis 12 Stunden bei 1000 bis 1500°C, bevorzugt bei ca. 1450°C, in stickstoffhaltiger Atmosphäre in $\alpha$-$Si_3N_4$ umgewandelt.

Das so erhaltene erfindungsgemäße $Si_3N_4$ liegt zu mehr als 80 Gew.-% in der $\alpha$-Phase vor, es enthält mindestens 38,5 Gew.-% Stickstoff, Chlor ist nicht nachweisbar.

Der Sauerstoff- bzw. der Kohlenstoffgehalt des erfindungsgemäßen Siliciumnitrids beträgt bevorzugt weniger als 1 % bzw. weniger als 0,1 %.

Im folgenden wird die Erfindung beispielhaft erläutert, ohne daß hierin eine Einschränkung zu sehen ist.

## Beispiel 1

Ein mit Teflon ausgekleideter 500 ml-Rührautoklav wird unter Schutzgas mit 10 g $Si(NHCH_3)_4$ befüllt und verschlossen. Anschließend werden 200 ml Reinstammoniak aufgedrückt, danach wird der Autoklav mit 5°C/min auf 100°C erhitzt und bei dieser Temperatur 24 h belassen. Der Druck im Autoklaven beträgt bei dieser Temperatur ca. 6 MPa (60 bar).

Nach Beendigung der Reaktion wird der Autoklav entspannt, und das weiße pulverförmige Diimid zur vollständigen Umaminierung in einem Ofen bei ca. 800°C ca. 30 Minuten im Ammoniakstrom calciniert.

Die Ausbeute ist quantitativ.

```
Analyse:  Si:  49,0 Gew.-%        N:  48,0 Gew.-%

          H:    1,9 Gew.-%        C:   0,4 Gew.-%

          Cl:   0,0006 Gew.-%     O:   0,6 Gew.-%
```

## Beispiel 2

Ein mit Teflon ausgekleideter 500 ml-Rührautoklav wird unter Schutzgas mit 10 g $Si(NH\text{-}C_2H_5)_4$ befüllt und verschlossen. Anschließend werden 250 ml Reinstammoniak aufgedrückt, danach wird der Autoklav mit 5°C/min auf 100°C erhitzt und bei dieser Temperatur 48 h belassen. Der Druck im Autoklaven beträgt bei dieser Temperatur ca. 10 bis 11 MPa (100 bis 110 bar).

Nach Beendigung der Reaktion wird der Autoklav entspannt, und das weiße pulverförmige Diimid zur vollständigen Umaminierung in einem Ofen bei ca. 800°C ca. 30 min im Ammoniakstrom calciniert.

```
Analyse:    Si:  48,4 Gew.-%        N:  48,5 Gew.-%

            H:    2,0 Gew.-%        C:   0,3 Gew.-%

            Cl:   0,1 Gew.-%        O:   0,6 Gew.-%
```

Der höhere Chloridgehalt des mit Tetrakisethylaminosilan dargestellten Siliciumdiimids liegt an einer nicht vollständig gelungenen Abtrennung des Ethylaminhydrochlorides von dem Aminosilan.

Beispiel 3

Das gemäß Beispiel 1 erhaltene Pulver wird mit 10°C/min auf 1450°C erhitzt und dort ca. 3 Stunden in einer hochreinen Stickstoffatmosphäre getempert.

```
Analyse:    Si:  60,3 Gew.-%        N:   39,3 Gew.-%

            C:    0,1 Gew.-%        Cl:  nicht nachweisbar

            O:    0,2 Gew.-%
```

Oberfläche nach BET: 20 m²/g
Teilchengröße: zwischen 0,1 und 0,8 μm

**Patentansprüche**

**Patentansprüche für folgende Vertragsstaaten : CH, DE, FR, GB, IT, LI, NL, SE**

1.  Siliciumdiimid $[Si(NH)_2]_x$, dadurch gekennzeichnet, daß es einen Kohlenstoffgehalt von maximal 0,5 Gew.-%, einen Chlorgehalt von maximal 20 ppm aufweist und schwefelfrei ist.

2.  Siliciumdiimid gemäß Anspruch 1, dadurch gekennzeichnet, daß der Chlorgehalt weniger als 10 ppm beträgt.

3.  Verfahren zur Herstellung von Siliciumdiimid gemäß einem der Ansprüche 1 oder 2, dadurch gekennzeichnet, daß ein chlorfreies Organylaminosilan der allgemeinen Formel $Si(NRR')_4$, wobei R und R' gleich oder verschieden sind und $C_1$-$C_6$-Alkyl, Vinyl, Phenyl oder Wasserstoff sind, mit Ammoniak bei Temperaturen zwischen 50°C und 300°C unter erhöhtem Druck zu Siliciumdiimit umgesetzt wird.

4.  Verfahren gemäß Anspruch 3, dadurch geksnnzeichnet, daß R = $CH_3$ und R' = H bedeutet.

5.  Verfahren gemäß Anspruch 3, dadurch gekennzeichnet, daß R = $C_2H_5$ und R' = H bedeutet.

6.  Verfahren zur Herstellung von Siliciumdiimid gemäß einem oder mehreren der Ansprüche 1 bis 3, dadurch gekennzeichnet, daß das Molverhältnis von Organylaminosilan zu Ammoniak zwischen 1:3 und 1:1000 beträgt.

7.  Verfahren gemäß einem oder mehreren der Ansprüche 3 bis 6, dadurch gekennzeichnet, daß das so erhaltene Produkt isoliert und 20 Minuten bis 6 Stunden zwischen 600°C und 1200°C in ammoniakhaltige Atmosphäre gebracht wird.

8.  Verfahren gemäß einem oder mehrerer der Ansprüche 3 bis 7, dadurch gekennzeichnet, daß das Siliciumdiimid 20 Minuten bis 12 Stunden bei 1000 bis 1500°C in stickstoffhaltiger Atmosphäre zu Siliciumnitrid umgesetzt wird.

4

**Patentansprüche für folgenden Vertragsstaat : ES**

1. Verfahren zur Herstellung von Siliciumdiimid $[Si(NH)_2]_x$, welches einen Kohlenstoffgehalt von maximal 0,5 Gew.-% und einen Chlorgehalt von maximal 20 ppm aufweist, dadurch gekennzeichnet, daß ein chlorfreies Organylaminosilan der allgemeinen Formel $Si(NRR')_4$, wobei R und R' gleich oder verschieden sind und $C_1$-$C_6$-Alkyl, Vinyl, Phenyl oder Wasserstoff sind, mit Ammoniak bei Temperaturen zwischen 50°C und 300°C unter erhöhtem Druck zu Siliciumdiimit umgesetzt wird.

2. Verfahren gemäß Anspruch 1, dadurch gekennzeichnet, daß der Chlorgehalt weniger als 10 ppm beträgt.

3. Verfahren gemäß einem der Ansprüche 1 oder 2, dadurch gekennzeichnet, daß R = $CH_3$ und R' = H bedeutet.

4. Verfahren gemäß einem der Ansprüche 1 oder 2, dadurch gekennzeichnet, daß R = $C_2H_5$ und R' = H bedeutet.

5. Verfahren zur Herstellung von Siliciumdiimid gemäß einem der Ansprüche 1 oder 3, dadurch gekennzeichnet, daß das Molverhältnis von Organylaminosilan zu Ammoniak zwischen 1:3 und 1:1000 beträgt.

6. Verfahren gemäß einem oder mehreren der Ansprüche 3 bis 5, dadurch gekennzeichnet, daß das so erhaltene Produkt isoliert und 20 Minuten bis 6 Stunden zwischen 600°C und 1200°C in ammoniakhaltige Atmosphäre gebracht wird.

7. Verfahren gemäß einem oder mehrerer der Ansprüche 1 bis 6, dadurch gekennzeichnet, daß das Siliciumdiimid 20 Minuten bis 12 Stunden bei 1000 bis 1500°C in stickstoffhaltiger Atmosphäre zu Siliciumnitrid umgesetzt wird.

**Claims**

**Claims for the following Contracting States : CH, DE, FR, GB, IT, LI, NL, SE**

1. Silicon diimide $[Si(NH)_2]_x$, characterized in that it has a carbon content of at most 0.5% by weight and a chlorine content of at most 20 ppm and is free from sulfur.

2. Silicon diimide as claimed in claim 1, characterized in that it has a chlorine content of less than 10 ppm.

3. A process for the production of the silicon diimide claimed in claim 1 or 2, characterized in that a chlorine-free organyl aminosilane corresponding to the general formula $Si(NRR')_4$, where R and R' are the same or different and represent $C_{1-6}$ alkyl, vinyl, phenyl or hydrogen, is reacted with ammonia under elevated pressure at temperatures of 50°C to 300°C to form silicon diimide.

4. A process as claimed in claim 3, characterized in that R = $CH_3$ and R' = H.

5. A process as claimed in claim 3, characterized in that R = $C_2H_5$ and R' = H.

6. A process for the production of silicon diimide as claimed in one or more of claims 1 to 3, characterized in that the molar ratio of organyl aminosilane to ammonia is between 1:3 and 1:1,000.

7. A process as claimed in one or more of claims 3 to 6, characterized in that the product thus obtained is isolated and placed in an ammonia-containing atmosphere for 20 minutes to 6 hours at temperatures of 600°C to 1200°C.

8. A process as claimed in one or more of claims 3 to 7, characterized in that the silicon diimide is reacted for 20 minutes to 12 hours at 1000 to 1500°C in a nitrogen-containing atmosphere to form silicon nitride.

**Claims for the following Contracting State : ES**

1. A process for the production of silicon diimide $[Si(NH)_2]_x$ having a carbon content of at most 0.5% by weight and a chlorine content of at most 20 ppm, characterized in that a chlorine-free organyl aminosilane corresponding to the general formula Si(NRR')$_4$, where R and R' are the same or different and represent C$_{1-6}$ alkyl, vinyl, phenyl or hydrogen, is reacted with ammonia under elevated pressure at temperatures of 50°C to 300°C to form silicon diimide.

2. A process as claimed in claim 1, characterized in that the chlorine content is less than 10 ppm.

3. A process as claimed in claim 1 or 2, characterized in that R = CH$_3$ and R' = H.

4. A process as claimed in claim 1 or 2, characterized in that R = C$_2$H$_5$ and R' = H.

5. A process for the production of silicon diimide as claimed in claim 1 or 3, characterized in that the molar ratio of organyl aminosilane to ammonia is between 1:3 and 1:1,000.

6. A process as claimed in one or more of claims 3 to 5, characterized in that the product thus obtained is isolated and placed in an ammonia-containing atmosphere for 20 minutes to 6 hours at temperatures of 600°C to 1200°C.

7. A process as claimed in one or more of claims 1 to 6, characterized in that the silicon diimide is reacted for 20 minutes to 12 hours at 1000 to 1500°C in a nitrogen-containing atmosphere to form silicon nitride.


## Revendications

### Revendications pour les Etats contractants suivants : CH, DE, FR, GB, IT, LI, NL, SE

1. Diimidure de silicium [Si(NH)$_2$]$_x$, caractérisé en ce qu'il présente une teneur maximale en carbone de 0,5 % en poids, une teneur maximale en chlore de 20 ppm, et en ce qu'il est dépourvu de soufre.

2. Diimidure de silicium suivant la revendication 1, caractérisé en ce que la teneur en chlore est inférieure à 10 ppm.

3. Procédé de production de diimidure de silicium suivant l'une des revendications 1 et 2, caractérisé en ce qu'il est obtenu par réaction d'un organylaminosilane dépourvu de chlore, de formule générale Si(NRR')$_4$, dans laquelle R et R' sont égaux ou différents et représentent un groupe alkyle en C$_1$ à C$_6$, vinyle, phényle ou de l'hydrogène, avec l'ammoniac à des températures comprises entre 50°C et 300°C sous pression élevée.

4. Procédé suivant la revendication 3, caractérisé en ce que R représente CH$_3$ et R' représente H.

5. Procédé suivant la revendication 3, caractérisé en ce que R représente C$_2$H$_5$ et R' représente H.

6. Procédé de production de diimidure de silicium suivant une ou plusieurs des revendications 1 à 3, caractérisé en ce que le rapport molaire de l'organylaminosilane à l'ammoniac se situe entre 1:3 et 1:1000.

7. Procédé suivant une ou plusieurs des revendications 3 à 6, caractérisé en ce que le produit ainsi obtenu est isolé et est maintenu pendant une durée allant de 20 minutes à 6 heures entre 600 et 1200°C en atmosphère contenant de l'ammoniac.

8. Procédé suivant une ou plusieurs des revendications 3 à 7, caractérisé en ce que le diimidure de silicium est transformé en nitrure de silicium en atmosphère contenant de l'azote à 1000-1500°C pendant une durée de 20 minutes à 12 heures.

### Revendications pour l'Etat contractant suivant : ES

1. Procédé de production de diimidure de silicium [Si(NH)$_2$]$_x$, qui présente une teneur maximale en carbone de 0,5 % en poids et une teneur maximale de chlore de 20 ppm, caractérisé en ce qu'il est obtenu par réaction d'un organylaminosilane dépourvu de chlore, de formule générale Si(NRR')$_4$, dans laquelle R et R' sont égaux ou différents et représentent un groupe alkyle en C$_1$ à C$_6$, vinyle, phényle ou de l'hydrogène, avec l'ammoniac à des températures comprises entre 50°C et 300°C sous pression élevée.

2. Procédé suivant la revendication 1, caractérisé en ce que la teneur en chlore est inférieure à 10 ppm.

3. Procédé suivant l'une des revendications 1 et 2, caractérisé en ce que R est un groupe $CH_3$ et R' représente H.

4. Procédé suivant l'une des revendications 1 et 2, caractérisé en ce que R est un groupe $C_2H_5$ et R' représente H.

5. Procédé de production de diimidure de silicium suivant l'une des revendications 1 et 3, caractérisé en ce que le rapport molaire de l'organylaminosilane à l'ammoniac se situe entre 1:3 et 1:1000.

6. Procédé suivant une ou plusieurs des revendications 3 à 5, caractérisé en ce que le produit ainsi obtenu est isolé et maintenu au contact d'une atmosphère contenant de l'ammoniac à 600-1200°C pendant une durée allant de 20 minutes à 6 heures.

7. Procédé suivant une ou plusieurs des revendications 1 à 6, caractérisé en ce que le diimidure de silicium est transformé en nitrure de silicium au contact d'une atmosphère contenant de l'azote pendant une durée de 20 minutes à 12 heures à une température de 1000 à 1500°C.